# EUROPEAN PATENT APPLICATION

(11) **EP 3 772 766 A1**
(43) Date of publication of application: **10.02.2021**
(21) Application number: 20189243.7
(22) Date of filing: 03.08.2020
(51) Int. Cl.: H01M 8/04119, H01M 8/04828, H01M 8/0668

(54) **WATER TANK FOR FUEL CELL CAPABLE OF RECYCLING WATER AND FUEL CELL SYSTEM HAVING THE WATER TANK**

(30) Priority: 05.08.2019 KR 20190094843
(71) Applicant: Mico Co., Ltd., Anseong-si, Gyeonggi-do 456-390 (KR)
(72) Inventor: LEE, Jun Woo, Gyeonggi-do (KR); JI, Jun Gu, Gyeonggi-do (KR); CHOI, Song Ho, Gyeonggi-do (KR)
(74) Representative: Laine IP Oy

(57) **Abstract**

A water tank (100, 200) for a fuel cell includes a chamber structure (110, 210) including: a body (111, 211) having an inner space defined therein to receive water therein; and an inner partitioning wall (112, 212) extending from a bottom of the body to a predefined vertical level to divide the inner space into a condensed water receiving space and a to-be-supplied water receiving space; an off gas receiving pipe (129, 220) including: a first pipe having one end disposed within the condensed water receiving space and a second end disposed outside the inner space; and a second pipe disposed outside the inner space and connected to the first pipe and receiving exhausted gas containing water vapor; a water and air separator (130, 230) coupled to the second end of the first pipe; a gas blocking wall (150, 250) extending downwardly from a portion of the cover of the body between the inner partitioning wall and the off gas receiving pipe into the water contained in the condensed water receiving space; and an evaporator connection pipe (160, 260) coupled to the body to penetrate a portion of the cover of the body defining the to-be-supplied water receiving space, wherein the evaporator connection pipe supplies water received in the to-be-supplied water receiving space to an evaporator.

## Description

### BACKGROUND

### 1. Field

The present disclosure relates to a water tank for a fuel cell capable of recycling water from an anode off gas and a fuel cell system including the same.

### 2. Description of Related Art

A fuel cell generates electricity using reaction between hydrogen and oxygen. The fuel cell is the most efficient when using hydrogen directly. For this purpose, a hydrogen storage tank may be directly installed at a place where the fuel cell is installed. However, this may cause a lot of safety problems. Therefore, at present, hydrocarbon fuel is reformed to produce hydrogen which in turn is used as fuel for the fuel cell.

A method of reforming the hydrocarbon fuel may include a steam reforming method in which hydrogen is produced by reacting water vapor and the hydrocarbon fuel with each other. In the steam reforming method, hydrogen, carbon monoxide, carbon dioxide, etc. are mainly produced via the reaction between the water vapor and the hydrocarbon fuel, and then are supplied as fuel gas to the fuel cell.

Exhausted gas from a fuel cell stack contains water vapor. Therefore, many studies have been conducted to collect water vapor contained in the exhausted gas rather than using a separate external water source, and to use the collected water vapor to reform the fuel. Further, the exhausted gas from the fuel cell stack includes carbon dioxide as one of the greenhouse gases. Thus, various studies have been conducted on technologies for removing the carbon dioxide from the exhausted gas in an environmental aspect.

### SUMMARY

This Summary is provided to introduce a selection of concepts in a simplified form that are further described below in the Detailed Description. This Summary is not intended to identify all key features or essential features of the claimed subject matter, nor is it intended to be used alone as an aid in determining the scope of the claimed subject matter.

One purpose of the present disclosure is to provide a water tank for a fuel cell that stores condensed water from exhausted gas discharged from a fuel cell stack and water supplied from an external water source and supply the condensed water and the supplied water to an evaporator.

Another purpose of the present disclosure is to provide a fuel cell system equipped with the water tank for the fuel cell.

Purposes in accordance with the present disclosure are not limited to the above-mentioned purpose. Other purposes and advantages in accordance with the present disclosure as not mentioned above may be understood from following descriptions and more clearly understood from embodiments in accordance with the present disclosure. Further, it will be readily appreciated that the purposes and advantages in accordance with the present disclosure may be realized by features and combinations thereof as disclosed in the claims.

A first aspect of the present disclosure provides a water tank for a fuel cell, the water tank being characterized in that the water tank comprises: a chamber structure including: a body having an inner space defined therein to receive water therein, wherein the body has a bottom, a side wall extending upward from an edge portion of the bottom, the inner space being defined by the side wall and the bottom and having an open top, and a cover extending from an upper end of the side wall and covering the open top of the inner space; and an inner partitioning wall extending from the bottom to a predefined vertical level to divide the inner space into a condensed water receiving space and a to-be-supplied water receiving space; an off gas receiving pipe including: a firs pipe extending in a direction of gravity to penetrate the cover of the body and having one end disposed within the condensed water receiving space and a second end disposed outside the inner space; and a second pipe disposed outside the inner space and connected to the first pipe and receiving exhausted gas containing water vapor; a water and air separator coupled to the second end of the first pipe; a gas blocking wall extending downwardly from a portion of the cover of the body between the inner partitioning wall and the off gas receiving pipe into the water contained in the condensed water receiving space, wherein the gas blocking wall prevents gas from moving from the condensed water receiving space to the to-be-supplied water receiving space through a gap between the cover and water contained in the condensed water receiving space; and an evaporator connection pipe coupled to the body to penetrate a portion of the cover of the body defining the to-be-supplied water receiving space, wherein the evaporator connection pipe supplies water received in the to-be-supplied water receiving space to an evaporator.

In one implementation of the first aspect, the chamber structure further includes: a makeup water supply port coupled to a portion of the body defining the condensed water receiving space for supplying makeup water fed from an external water source to the condensed water receiving space; and a water-level adjustment port coupled to a portion of the body defining the to-be-supplied water receiving space, wherein when a water level of the to-be-supplied water receiving space is greater than or equal to a predefined level, the water-level adjustment port is configured to discharge water from the to-be-supplied water receiving space.

In one implementation of the first aspect, the water tank further comprises a filter member coupled to a top of the water and air separator or the first end of the first pipe.

In one implementation of the first aspect, the filter member includes a metal mesh structure and a nonwoven filter coupled to the metal mesh structure.

In one implementation of the first aspect, the water tank further comprises: a first level sensor to measure a level of water contained in the condensed water receiving space; and a second level sensor to measure a level of water contained in the to-be-supplied water receiving space.

In one implementation of the first aspect, the water tank further comprises a makeup water supply adjustment valve installed at the makeup water supply port, wherein when the level measured by the first level sensor is lower than a predefined first level, or when the level measured by the second level sensor is lower than a predefined second level, the makeup water supply adjustment valve is configured to supply water to the condensed water receiving space based on a signal from the first or second level sensor.

In one implementation of the first aspect, the water tank further comprises a cathode and an anode spaced apart from each other and disposed inside water contained in the condensed water receiving space, wherein the first end of the first pipe is disposed inside water contained in the condensed water receiving space.

In one implementation of the first aspect, the chamber structure 110 or 210 further includes a water discharge port capable of discharging water from the condensed water receiving space.

In one implementation of the first aspect, an oxidation reaction to generate electrons occurs at the anode, while a reduction reaction in which hydrogen ions are reduced using the electrons occurs at the cathode.

In one implementation of the first aspect, the cover is coupled to the side wall to open and close the inner space.

In one implementation of the first aspect, the cover is coupled to the side wall in a detachable manner from the side wall.

A first aspect of the present disclosure provides a fuel cell system comprising: a fuel cell stack; a water tank for collecting and storing water from exhausted gas discharged from the fuel cell stack; an evaporator to convert water supplied from the water tank into water vapor; and a reformer to reform hydrocarbon fuel using the water vapor supplied from the evaporator and supply the reformed fuel to the fuel cell stack. The fuel cell system is characterized in that the water tank includes: a chamber structure including: a body having an inner space defined therein to receive water therein, wherein the body has a bottom, a side wall extending upward from an edge portion of the bottom, the inner space being defined by the side wall and the bottom and having an open top, and a cover extending from an upper end of the side wall and covering the open top of the inner space; and an inner partitioning wall extending from the bottom to a predefined vertical level to divide the inner space into a condensed water receiving space and a to-be-supplied water receiving space; an off gas receiving pipe including: a firs pipe extending in a direction of gravity to penetrate the cover of the body and having one end disposed within the condensed water receiving space and a second end disposed outside the inner space; and a second pipe disposed outside the inner space and connected to the first pipe and receiving exhausted gas containing water vapor; a water and air separator coupled to the second end of the first pipe; a gas blocking wall extending downwardly from a portion of the cover of the body between the inner partitioning wall and the off gas receiving pipe into the water contained in the condensed water receiving space, wherein the gas blocking wall prevents gas from moving from the condensed water receiving space to the to-be-supplied water receiving space through a gap between the cover and water contained in the condensed water receiving space; and an evaporator connection pipe coupled to the body to penetrate a portion of the cover of the body defining the to-be-supplied water receiving space, wherein the evaporator connection pipe supplies water received in the to-be-supplied water receiving space to the evaporator.

In one implementation of the second aspect, the system further comprises a burner to generate high-temperature exhausted gas by combusting anode exhausted gas and cathode exhausted gas discharged from the fuel cell stack, wherein the second pipe receives the generated exhausted gas from the burner.

In one implementation of the second aspect, the system further comprises a heat exchanger for heating air supplied from an external air source using the high-temperature exhausted gas generated from the burner, wherein the second pipe receives the heat-exchanged exhausted gas from the heat exchanger.

Effects in accordance with the present disclosure may be as follows but may not be limited thereto.

According to the water tank for the fuel cell of the present embodiment, the condensed water from the exhausted gas discharged from the fuel cell stack and the water supplied from the external water source are supplied to the evaporator. Thus, the water may be stably and effectively supplied to the evaporator. Further, the water may be accommodated in the two spaces separated via the inner partitioning wall. Thus, it is easy to control a level of the water. Additionally, an amount of carbon dioxide emitted from the fuel cell system may be significantly reduced.

Further, according to the fuel cell system according to the present disclosure, the fuel may be reformed using the water collected from the exhausted gas discharged from the fuel cell stack, and the carbon dioxide may be removed from the collected water, thereby to improve energy efficiency and to be environmentally friendly.

Moreover, the effect of the present disclosure is not limited to the above effects. It should be understood to include all possible effects derived from descriptions of the present disclosure or a configuration as set forth in the claims.

### BRIEF DESCRIPTION OF DRAWINGS

FIG. 1 is a diagram illustrating a water tank for a fuel cell according to an embodiment of the present disclosure.
FIG. 2 is a diagram illustrating a water tank for a fuel cell according to another embodiment of the present disclosure.
FIG. 3 is a diagram illustrating a fuel cell system according to an embodiment of the present disclosure.

### DETAILED DESCRIPTIONS

For simplicity and clarity of illustration, elements in the figures, are not necessarily drawn to scale. The same reference numbers in different figures, denote the same or similar elements, and as such perform similar functionality. Also, descriptions and details of well-known steps and elements are omitted for simplicity of the description. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure.

Examples of various embodiments are illustrated and described further below. It will be understood that the description herein is not intended to limit the claims to the specific embodiments described. On the contrary, it is intended to cover alternatives, modifications, and equivalents as may be included within the spirit and scope of the present disclosure as defined by the appended claims.

The terminology used herein is for the purpose of describing particular embodiments only and is not intended to be limiting of the present disclosure. As used herein, the singular forms "a" and "an" are intended to include the plural forms as well, unless the context clearly indicates otherwise. It will be further understood that the terms "comprises", "comprising", "includes", and "including" when used in this specification, specify the presence of the stated features, integers, operations, elements, and/or components, but do not preclude the presence or addition of one or more other features, integers, operations, elements, components, and/or portions thereof. As used herein, the term "and/or" includes any and all combinations of one or more of the associated listed items. Expression such as "at least one of" when preceding a list of elements may modify the entire list of elements and may not modify the individual elements of the list.

It will be understood that, although the terms "first", "second", "third", and so on may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

In addition, it will also be understood that when a first element or layer is referred to as being present "on" a second element or layer, the first element may be disposed directly on the second element or may be disposed indirectly on the second element with a third element or layer being disposed between the first and second elements or layers. It will be understood that when an element or layer is referred to as being "connected to", or "coupled to" another element or layer, it may be directly on, connected to, or coupled to the other element or layer, or one or more intervening elements or layers may be present. In addition, it will also be understood that when an element or layer is referred to as being "between" two elements or layers, it may be the only element or layer between the two elements or layers, or one or more intervening elements or layers may also be present.

Further, as used herein, when a layer, film, region, plate, or the like is disposed "on" or "on a top" of another layer, film, region, plate, or the like, the former may directly contact the latter or still another layer, film, region, plate, or the like may be disposed between the former and the latter. As used herein, when a layer, film, region, plate, or the like is directly disposed "on" or "on a top" of another layer, film, region, plate, or the like, the former directly contacts the latter and still another layer, film, region, plate, or the like is not disposed between the former and the latter. Further, as used herein, when a layer, film, region, plate, or the like is disposed "below" or "under" another layer, film, region, plate, or the like, the former may directly contact the latter or still another layer, film, region, plate, or the like may be disposed between the former and the latter. As used herein, when a layer, film, region, plate, or the like is directly disposed "below" or "under" another layer, film, region, plate, or the like, the former directly contacts the latter and still another layer, film, region, plate, or the like is not disposed between the former and the latter.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

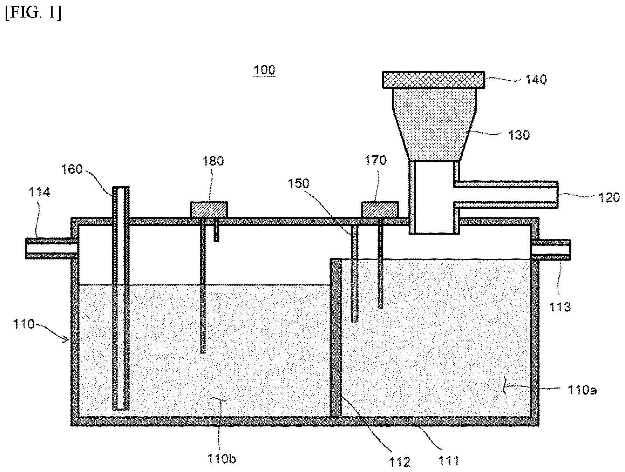

FIG. 1 is a diagram illustrating a water tank for a fuel cell according to an embodiment of the present disclosure.

Referring to FIG. 1, a water tank 100 for a fuel cell according to an embodiment of the present disclosure may include a chamber structure 110, an off gas receiving pipe 120, a water and air separator 130, a filter member 140, a gas blocking wall 150, an evaporator connection pipe 160, a first level sensor 170, and a second level sensor 180.

The chamber structure 110 may include a body 111 having an inner space defined therein that may receive water therein, and an inner partitioning wall 112 that divides the inner space into two sub-spaces.

The body 111 may have a bottom, a side wall extending upward from an edge portion of the bottom, wherein an inner space is defined by the side wall and the bottom and has an open top, and a cover extending from an upper end of the side wall and covering the open top of the inner space. The cover may open and close the inner space. In one example, the cover may be coupled to the side wall in a detachable manner from the side wall.

The inner partitioning wall 112 extends from the bottom to a certain height to divide the inner space into the two sub-spaces, that is, a condensed water receiving space 110a and a to-be-supplied water receiving space 110b. The condensed water receiving space 110a and the to-be-supplied water receiving space 110b may communicate with each other through a gap formed between an upper end of the inner partitioning wall 112 and the cover. As a result, when a level of water in the condensed water receiving space 110a is higher than a height of the inner partitioning wall 112, the water in the condensed water receiving space 110a may pass to the to-be-supplied water receiving space 110b.

In one example, the chamber structure 110 may further include a makeup water supply port 113 coupled to a portion of the body 111 defining the condensed water receiving space 110a, and connected to an external water source (not shown) and capable of supplying makeup water provided from the water source to the condensed water receiving space 110a, and a water-level adjustment port 114 coupled to a portion of the body 111 defining the to-be-supplied water receiving space 110b. When a water level of the to-be-supplied water receiving space 110b is greater than or equal to a predefined level, the water-level adjustment port 114 may be configured for discharging water from the to-be-supplied water receiving space 110b to an outside. A height from the bottom thereof to the water-level adjustment port 114 may be equal to or slightly larger than the height of the inner partitioning wall 112. A height from the bottom of the body 111 to the makeup water supply port 113 is not particularly limited, but may be equal to or slightly larger than the height of the inner partitioning wall 112.

The off gas receiving pipe 120 may have a first pipe extending in a direction of gravity to penetrate the cover of the body 111 and having one end disposed within the inner space of the body 111 and a second end disposed outside the inner space and coupled to the water and air separator 130, and a second pipe connected to a middle portion of the first pipe and receiving exhausted gas discharged from a fuel cell stack.

The first end of the first pipe may be disposed outside or inside the water contained in the condensed water receiving space 110a.

In one embodiment, the second pipe may receive the exhausted gas as discharged from the fuel cell stack and then burned in a burner. In this case, the exhausted gas may include water vapor, unreacted fuel and air.

In another embodiment, the second pipe may receive anode exhausted gas that is discharged from the fuel cell stack and then exchanges heat. In this case, the anode exhausted gas may include water vapor and unreacted fuel.

The water and air separator 130 may be coupled to the second end of the first pipe, and may condense water from the exhausted gas, and drop the condensed water into the condensed water receiving space 110a through the first pipe via gravity. The water and air separator 130 may include a known water and air separator device without limitation. In one embodiment, the water and air separator 130 may have a structure that a width thereof increases upwardly. In this case, a flow rate may be lowered due to diffusion of the gas so that water vapor may be condensed more effectively, and the gas and the water may be prevented from flowing back through the second pipe.

The filter member 140 may be coupled to the top of the water and air separator 130, and may remove heavy metals and other pollutants from the exhausted gas emitted from the water and air separator 130. In one embodiment, the filter member 140 may include a metal mesh structure and a nonwoven filter coupled to the metal mesh structure.

In one example, the filter member 140 may be coupled to the first end of the first pipe.

The gas blocking wall 150 may extend downwardly from a portion of the cover of the body 111 between the inner partitioning wall 112 and the off gas receiving pipe 120 to the inside of the water contained in the condensed water receiving space 110a and may prevent the gas from moving from the condensed water receiving space 110a to the to-be-supplied water receiving space 110b through a gap above the water contained in the condensed water receiving space 110a. A material of the gas blocking wall 150 is not particularly limited. For example, the gas blocking wall 150 may be made of a polymer material or a SUS material.

The evaporator connection pipe 160 may be coupled to the body 111 to penetrate a portion of the cover of the body 111 defining the to-be-supplied water receiving space 110b and may supply the water received in the to-be-supplied water receiving space 110b to an evaporator (not shown).

In one embodiment, the water received in the to-be-supplied water receiving space 110b may be supplied to the evaporator (not shown) through the evaporator connection pipe 160 using a pump (not shown). Thus, a lower end of the evaporator connection pipe 160 may be adjacent to the bottom of the body 111. For example, a ratio between a diameter of the evaporator connection pipe 160 and a height from the bottom of the body 111 to the lower end of the evaporator connection pipe 160 may be about 1:1 to 1:3. When the evaporator connection pipe 160 is disposed in this manner, pressure loss may be reduced.

The first level sensor 170 may measure a level of water contained in the condensed water receiving space 110a. The level of water accommodated in the condensed water receiving space 110a may be maintained to be higher than the lower end of the gas blocking wall 150 using the first level sensor 170 such that the gas is prevented from moving from the condensed water receiving space 110a to the to-be-supplied water receiving space 110b. In one example, the first level sensor 170 may be coupled to the cover of the body 111.

In one embodiment, a makeup water supply adjustment valve (not shown) may be installed at the makeup water supply port 113. When the level measured by the first level sensor 170 is lower than a preset percentage, for example, in a range of about 110 to 150% of a vertical level of the lower end of the gas blocking wall 150, the makeup water supply adjustment valve may allow the water to be supplied to the condensed water receiving space 110a based on a signal from the first level sensor 170.

The second level sensor 180 may measure a level of water contained in the to-be-supplied water receiving space 110b. The second level sensor 180 may be used to maintain the level of water received in the to-be-supplied water receiving space 110b to be lower than a vertical level of the water-level adjustment port 114, and be higher than a predefined level.

In one embodiment, the makeup water supply adjustment valve (not shown) may be installed at the makeup water supply port 113. When the level of water received in the to-be-supplied water receiving space 110b is lower than a predefined level, the makeup water supply adjustment valve may allow the water to be supplied to the condensed water receiving space 110a to increase the water level of the to-be-supplied water receiving space 110b, based on a signal from the second level sensor 180.

According to the water tank for the fuel cell of the above embodiment, the condensed water from the exhausted gas discharged from the fuel cell stack and the water supplied from the external water source may be supplied to the evaporator. Thus, the water may be stably and effectively supplied to the evaporator. Further, the water may be accommodated in the two spaces divided via the inner partitioning wall, thereby to facilitate the adjustment of the level of the water.

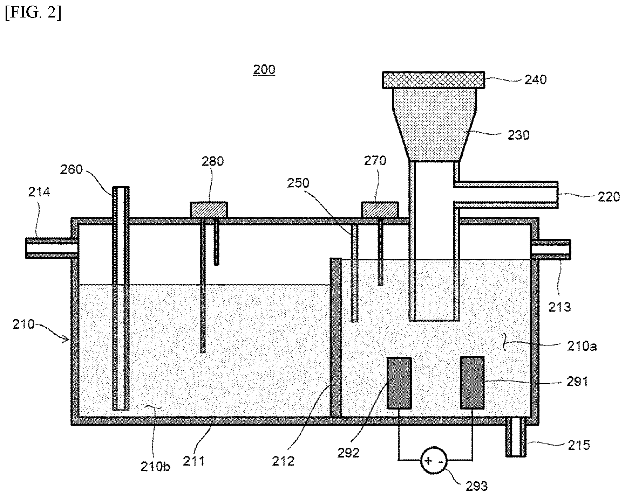

FIG. 2 is a diagram illustrating a water tank for a fuel cell according to another embodiment of the present disclosure.

Referring to FIG. 2, a water tank 200 for a fuel cell according to another embodiment of the present disclosure may include a chamber structure 210, an off gas receiving pipe 220, a water and air separator 230, a filter member 240, a gas blocking wall 250, an evaporator connection pipe 260, a first level sensor 270, a second level sensor 280, a cathode 291 and an anode 292.

The remaining components except the chamber structure 210, the off gas receiving pipe 220, the cathode 291 and the anode 292 are substantially the same as those of the water tank 100 for the fuel cell as described with reference to FIG. 1, and, thus, detailed descriptions thereof will be omitted.

In general, in a fuel cell, carbon dioxide is produced together with hydrogen, as described in following Reaction Formulas 1 and 2 in a reaction process in which hydrocarbon fuel is reformed using water vapor. Carbon dioxide is supplied to the fuel cell stack and then is discharged therefrom. Carbon dioxide is one of the greenhouse gases. Thus, various studies have been conducted to reduce the carbon dioxide emission.

[Reaction Formula 1] *CH*₄ + *H*₂*O→CO*+3*H*₂

[Reaction Formula 2] *CO*+ *H*₂*O→CO₂* + *H*₂

In this embodiment of the present disclosure, a configuration for reducing the carbon dioxide emission is disclosed. This configuration is related to a difference between the water tank 200 for the fuel cell according to this embodiment and the water tank 100 for the fuel cell as described with reference to FIG. 1.

The chamber structure 210 is substantially the same as the chamber structure 110 of the water tank 100 for the fuel cell described with reference to FIG. 1 except that a discharge port 215 capable of discharging water from the condensed water supply space 210a is formed in the body 211. Redundant detailed descriptions thereof will be omitted.

When the carbon dioxide contained in the exhausted gas is supplied into the water in the condensed water receiving space 210a, hydrogen ions (H⁺), bicarbonate ions (HCO₃⁻), and carbonate ions (CO₃²⁻) are produced according to a following Reaction Formula 3. Therefore, solubility of bicarbonate ions (HCO₃⁻), and carbonate ions (CO₃²⁻) is increased and thus water having bicarbonate ions (HCO₃⁻), and carbonate ions (CO₃²⁻) at a higher content is discharged. Thus, the amount of carbon dioxide emitted from the fuel cell system may be significantly reduced. The discharge port 215 may discharge water having bicarbonate ions (HCO₃⁻), and carbonate ions (CO₃²⁻) at a higher content from the condensed water receiving space 210a periodically or based on a signal from a sensor indicating that a concentration of bicarbonate ions (HCO₃⁻) is higher than a preset concentration. Then, the makeup water may be supplied through the makeup water supply port 213 to the condensed water receiving space 210a by as much as the amount of the water as discharged.

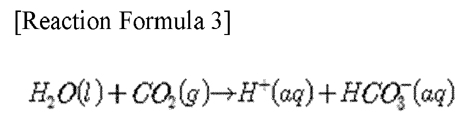

The off gas receiving pipe 220 may include a first pipe extending in a direction of gravity to penetrate the cover of the body 211 and having one end placed inside the water contained in the condensed water receiving space 210a and a second end placed outside the inner space of the body 111 and coupled the water and air separator 230, and a second pipe connected to a middle portion of the first pipe and receiving the exhausted gas discharged from the fuel cell stack. The first end of the first pipe is placed inside the water contained in the condensed water receiving space 210a. Thus, when the exhausted gas is supplied to the off gas receiving pipe 220, bubbles may be generated inside the water contained in the condensed water receiving space 210a due to a pressure of the exhausted gas. The exhausted gas discharged from the fuel cell stack essentially contains carbon dioxide. When the bubbles are generated inside the water as described above, the amounts of carbon dioxide and bicarbonate ions (HCO₃⁻) that may be dissolved in the water may be increased.

The cathode 291 and the anode 292 may be spaced apart from each other and may be disposed inside the water contained in the condensed water receiving space 210a. Voltage may be applied from a power supply device 293 thereto.

The anode 292 may be made of a metal such as vanadium (V), chromium (Cr), manganese (Mn), iron (Fe), cobalt (Co), nickel (Ni), copper (Cu), aluminum (Al), zinc (Zn), etc. In the anode 292, an oxidation reaction that generates electrons (e-) may occur as shown in a following Reaction Formula 4.

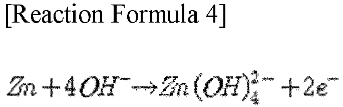

The cathode 291 may be made of a material such as carbon paper, carbon fiber, carbon felt, carbon cloth, platinum, etc. In the cathode 291, a reduction reaction that produces hydrogen (H₂) may occur as shown in a following Reaction Formula 5.

[Reaction Formula 5] 2*H*⁺+2*e*⁻→*H*₂

The water tank for the fuel cell of this embodiment may significantly reduce the amount of carbon dioxide emitted from the fuel cell system, in addition to the advantages of the water tank for the fuel cell described with reference to FIG. 1.

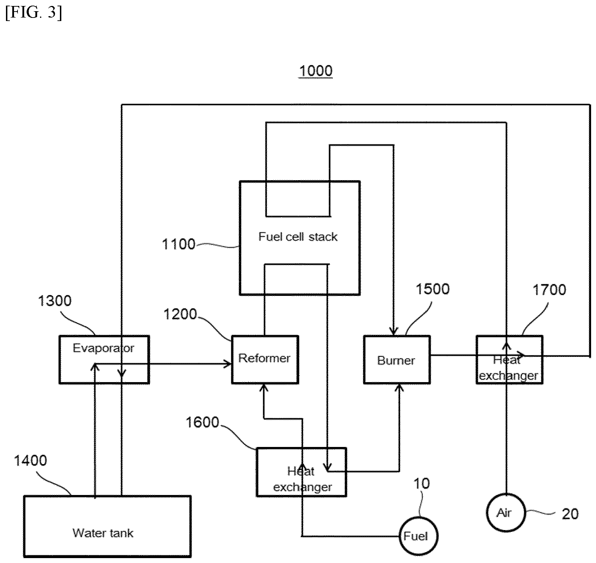

FIG. 3 is a diagram illustrating a fuel cell system according to an embodiment of the present disclosure.

Referring to FIG. 3, a fuel cell system 1000 according to an embodiment of the present disclosure may include a fuel cell stack 1100, a reformer 1200, an evaporator 1300, a water tank 1400, a burner 1500, a first heat exchanger 1600 and a second heat exchanger 1700.

The fuel cell stack 1100 may generate electrical energy via reacting of the reformed fuel with oxygen. The fuel cell stack 1100 may include a solid oxide fuel cell (SOFC) stack operating at high temperatures or a molten carbonate fuel cell (MCFC) stack.

The reformer 1200 may reform the hydrocarbon fuel supplied from an external fuel source 10 using water vapor and supply the reformed fuel to the fuel cell stack 1100. The evaporator 1300 may supply water vapor produced by vaporizing the water to the reformer 1200. Structures of the reformer 1200 and the evaporator 1300 are not particularly limited. A known reformer and a known evaporator for a fuel cell system may be applied without limitation. Thus, detailed descriptions thereof are omitted.

The water tank 1400 may collect water from the exhausted gas discharged from the fuel cell stack 100 and may supply the collected water to the evaporator 1300. The water tank 1400 may include the water tank 100 or 200 for the fuel cell as described with reference to FIG. 1 and FIG. 2. Thus, detailed descriptions thereof will be omitted.

The burner 1500 may generate high temperature exhausted gas by burning anode exhausted gas and cathode exhausted gas discharged from the fuel cell stack 1100. In one example, the water tank 1400 may collect water from the exhausted gas burned in the burner 1500.

The first heat exchanger 1600 may heat the hydrocarbon fuel supplied from the fuel source 10 using the high-temperature anode exhausted gas discharged from the fuel cell stack 1100, and may feed the heated hydrocarbon fuel to the reformer 1200.

The second heat exchanger 1700 may heat the air supplied from the external air source 20 using the high temperature exhausted gas generated via combustion in the burner 1500, and may feed the heated air to the fuel cell stack 1100.

According to the fuel cell system of the present disclosure, the fuel may be reformed using the water collected from the exhausted gas discharged from the fuel cell stack, and the carbon dioxide may be removed from the collected water, thereby to improve energy efficiency and to be environmentally friendly.

While the present disclosure has been described with reference to preferred embodiments, those skilled in the art will appreciate that the present disclosure may be variously modified and changed without departing from the spirit and scope of the present disclosure set forth in the following claims.

## Claims

1. A water tank 100 or 200 for a fuel cell, the water tank being **characterized in that** the water tank comprises:
a chamber structure 110 or 210 including:
a body 111 or 211 having an inner space defined therein to receive water therein, wherein the body has a bottom, a side wall extending upward from an edge portion of the bottom, the inner space being defined by the side wall and the bottom and having an open top, and a cover extending from an upper end of the side wall and covering the open top of the inner space; and
an inner partitioning wall 112 or 212 extending from the bottom to a predefined vertical level to divide the inner space into a condensed water receiving space 110a or 210a and a to-be-supplied water receiving space 110b or 210b;
an off gas receiving pipe 120 or 220 including:
a firs pipe extending in a direction of gravity to penetrate the cover of the body and having one end disposed within the condensed water receiving space and a second end disposed outside the inner space; and
a second pipe disposed outside the inner space and connected to the first pipe and receiving exhausted gas containing water vapor;
a water and air separator 130 or 230 coupled to the second end of the first pipe;
a gas blocking wall 150 or 250 extending downwardly from a portion of the cover of the body between the inner partitioning wall and the off gas receiving pipe into the water contained in the condensed water receiving space, wherein the gas blocking wall prevents gas from moving from the condensed water receiving space to the to-be-supplied water receiving space through a gap between the cover and water contained in the condensed water receiving space; and
an evaporator connection pipe 160 or 260 coupled to the body to penetrate a portion of the cover of the body defining the to-be-supplied water receiving space, wherein the evaporator connection pipe supplies water received in the to-be-supplied water receiving space to an evaporator.

2. The water tank of claim 1 **characterized in that** the chamber structure 110 or 210 further includes:
a makeup water supply port 113 or 213 coupled to a portion of the body defining the condensed water receiving space for supplying makeup water fed from an external water source to the condensed water receiving space; and
a water-level adjustment port 114 or 214 coupled to a portion of the body 111 defining the to-be-supplied water receiving space, wherein when a water level of the to-be-supplied water receiving space is greater than or equal to a predefined level, the water-level adjustment port is configured to discharge water from the to-be-supplied water receiving space.

3. The water tank of claim 1 **characterized in that** the water tank further comprises a filter member 140 or 240 coupled to a top of the water and air separator or the first end of the first pipe.

4. The water tank of claim 3 **characterized in that** the filter member 140 or 240 includes a metal mesh structure and a nonwoven filter coupled to the metal mesh structure.

5. The water tank of claim 2 **characterized in that** the water tank further comprises:
a first level sensor 170 or 270 to measure a level of water contained in the condensed water receiving space; and
a second level sensor 180 or 280 to measure a level of water contained in the to-be-supplied water receiving space.

6. The water tank of claim 5 **characterized in that** the water tank further comprises a makeup water supply adjustment valve installed at the makeup water supply port,
wherein when the level measured by the first level sensor is lower than a predefined first level, or when the level measured by the second level sensor is lower than a predefined second level, the makeup water supply adjustment valve is configured to supply water to the condensed water receiving space based on a signal from the first or second level sensor.

7. The water tank of claim 1 **characterized in that** the water tank further comprises a cathode 291 and an anode 292 spaced apart from each other and disposed inside water contained in the condensed water receiving space,
wherein the first end of the first pipe is disposed inside water contained in the condensed water receiving space.

8. The water tank of claim 7 **characterized in that** the chamber structure 110 or 210 further includes a water discharge port 215 capable of discharging water from the condensed water receiving space.

9. The water tank of claim 8 **characterized in that** an oxidation reaction to generate electrons occurs at the anode, while a reduction reaction in which hydrogen ions are reduced using the electrons occurs at the cathode.

10. The water tank of claim 1 **characterized in that** the cover is coupled to the side wall to open and close the inner space.

11. The water tank of claim 10 **characterized in that** the cover is coupled to the side wall in a detachable manner from the side wall.

12. A fuel cell system 1000 comprising:
a fuel cell stack 1100;
a water tank 1400 for collecting and storing water from exhausted gas discharged from the fuel cell stack;
an evaporator 1300 to convert water supplied from the water tank into water vapor; and
a reformer 1200 to reform hydrocarbon fuel using the water vapor supplied from the evaporator and supply the reformed fuel to the fuel cell stack,
wherein the fuel cell system 1000 is **characterized in that** the water tank 1400 includes:
a chamber structure 110 or 210 including:
a body 111 or 211 having an inner space defined therein to receive water therein, wherein the body has a bottom, a side wall extending upward from an edge portion of the bottom, the inner space being defined by the side wall and the bottom and having an open top, and a cover extending from an upper end of the side wall and covering the open top of the inner space; and
an inner partitioning wall 112 or 212 extending from the bottom to a predefined vertical level to divide the inner space into a condensed water receiving space 110a or 210a and a to-be-supplied water receiving space 110b or 210b;
an off gas receiving pipe 120 or 220 including:
a firs pipe extending in a direction of gravity to penetrate the cover of the body and having one end disposed within the condensed water receiving space and a second end disposed outside the inner space; and
a second pipe disposed outside the inner space and connected to the first pipe and receiving exhausted gas containing water vapor;
a water and air separator 130 or 230 coupled to the second end of the first pipe;
a gas blocking wall 150 or 250 extending downwardly from a portion of the cover of the body between the inner partitioning wall and the off gas receiving pipe into the water contained in the condensed water receiving space, wherein the gas blocking wall prevents gas from moving from the condensed water receiving space to the to-be-supplied water receiving space through a gap between the cover and water contained in the condensed water receiving space; and
an evaporator connection pipe 160 or 260 coupled to the body to penetrate a portion of the cover of the body defining the to-be-supplied water receiving space, wherein the evaporator connection pipe supplies water received in the to-be-supplied water receiving space to the evaporator.

13. The system of claim 12 **characterized in that** the system further comprises a burner 1500 to generate high-temperature exhausted gas by combusting anode exhausted gas and cathode exhausted gas discharged from the fuel cell stack 1100,
wherein the second pipe receives the generated exhausted gas from the burner.

14. The system of claim 13 **characterized in that** the system further comprises a heat exchanger 1700 for heating air supplied from an external air source 20 using the high-temperature exhausted gas generated from the burner,
wherein the second pipe receives the heat-exchanged exhausted gas from the heat exchanger.
